# EUROPEAN PATENT SPECIFICATION

(11) **EP 3 185 485 B1**
(45) Date of publication and mention of the grant of the patent: **10.10.2018**
(21) Application number: 16167843.8
(22) Date of filing: 02.05.2016
(51) Int. Cl.: H04L 12/403, H04L 12/40

(54) **COMMUNICATION SYSTEM WITH TRAIN BUS ARCHITECTURE**
KOMMUNIKATIONSSYSTEM MIT ZUGBUSARCHITEKTUR
SYSTÈME DE COMMUNICATION À ARCHITECTURE DE BUS DE TRAIN

(30) Priority: 21.12.2015 TW 104143017; 16.03.2016 US 201615071820
(43) Date of publication of application: 28.06.2017
(73) Proprietor: ViewMove Technologies Inc., Pingzhen City, Taoyuan County 324 (TW)
(72) Inventor: JIANG, Shyh-Biau, Taoyuan County 324 (TW); LIU, Li-Yeh, Taoyuan County 324 (TW); LEE, Dong-Liang, Taoyuan County 324 (TW); HUANG, Chuan-Fu, Taoyuan County 324 (TW); HSIAO, Yun-Sheng, Taoyuan County 324 (TW)
(74) Representative: Murgitroyd & Company

(56) References cited:
- DE-A1-102014 106 019
- US-A1- 2010 332 705
- US-A1- 2011 153 889

## Description

### BACKGROUND OF THE INVENTION

### Field of Invention

The present invention relates to a communication system, and more particularly to a communication system with a train bus architecture.

### Description of Prior Art

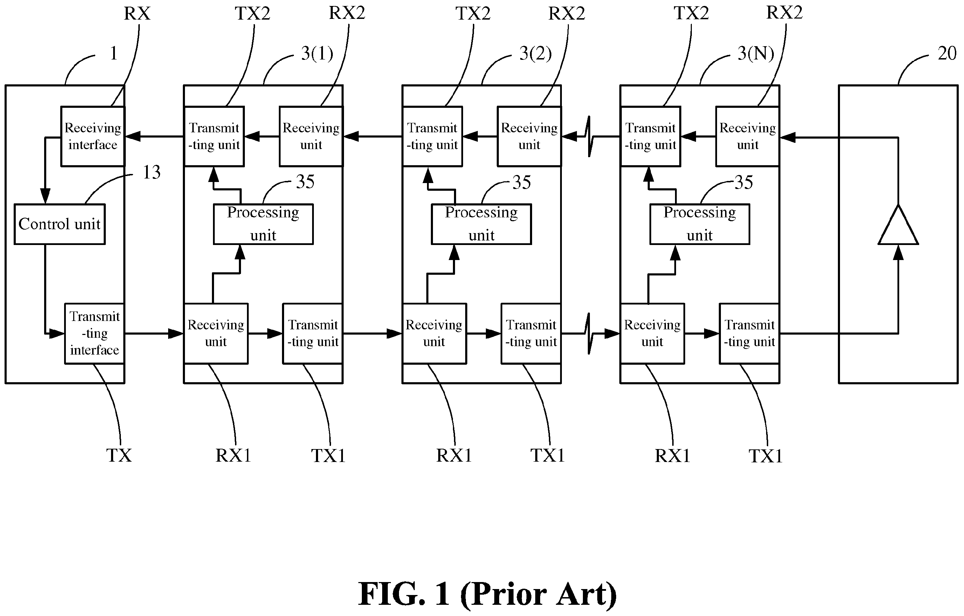

Conventionally, due to the increased demand for product manufacturing process, an automation technology is widely used in a production process and the automation technology usually employs a plurality of serially connected input/output (I/O) modules to transmit a packet serial having data packets wherein a master/slave structure is used to transmit and process the packet serial with the data packets, which are forwarded to the I/O modules, by a serial bus interface protocol. In US patent number US 8,531,942, entitled "COMMUNICATION SYSTEM HAVING A MASTER/SLAVE STRUCTURE", which is filed on May 20, 2009, FIGS. 1A and 1B are schematic views of a communication system comprising a master-slave structure. Similarly, FIG. 1 is a schematic block diagram of conventional communication system with a master-slave structure. The transmitter unit TX of the control unit 13 in the primary unit 1 sequentially transmits the data packets to the first slave unit 3(1) like an I/O module. The receiving unit RX1 of each slave unit 3 sequentially receives all the packets from the previous slave unit 3 wherein a processing unit 35 of a current slave unit 3 processes the packets, which belongs to the current slave unit 13, and the rest of data packets, which do not belong to the current slave unit 13, are forwarded to the next slave unit 3 by the transmitter unit TX1 of the current slave unit 13. After the last slave unit 3(N), i.e. stage "N", transmits the rest of data packets to the receiving unit RX1 (not shown) of the central unit 20, the transmitter unit TX2 (not shown) of the central unit 20 transmits the rest of data packets back to the receiving unit RX2 of the last slave unit 3. Afterwards, the last slave unit 3(N), i.e. stage "N", transmits the rest of data packets back to the previous slave unit 3, i.e. stage "N-1" (not shown), using the transmitter unit TX2, and the last slave unit 3, i.e. stage "N", replaces a portion of the rest of data packets, which belongs to the slave unit 3, with the processed packet in the last slave unit 3 in a return path from the central unit 20 to the primary unit 1. Similarly, the transmitter unit TX2 of the slave unit 3, i.e. stage "N-1", then transmits the collected packets to the previous slave unit 3, i.e. stage "N-2" (not shown), until the data packets in the return path are sent to the first slave unit 3. Finally, the primary unit 1 receives the processed packets of each slave unit 3.

However, the above-mentioned system requires two sets of transmitter units, i.e. TX1 and TX2 and two sets of receiving units, i.e. RX1 and RX2, to be installed in each slave unit 3 therein, thereby resulting in higher manufacturing cost of the system. Particularly, when the amount of the I/O modules is increased for the purpose of more and more manufacture processing nodes or stations, the quantity of the transmitter units and the receiving units will be considerably raised to increase the production cost. Furthermore, the response packets are inserted to the packet serial during the backward process, i.e. a returned procedure, from the central unit 20 to the control unit 13 via last slave unit 3(N) to first slave unit 3(1) and thus the response packets are not inserted to the packet serial during a forward process from the control unit 13 to the central unit 20 via first slave unit 3(1) to last slave unit 3(N), which results in the decreased transmission efficiency of the data packets. A related prior art, i.e., DE Patent Application Publication No. DE102014106019A1, filed on April 29, 2014, discloses that a network subscriber comprises a plurality of individual functional units, each individual functional unit comprising an application interface. Consequently, there is a need to develop a communication system to solve the aforementioned problems.

### SUMMARY OF THE INVENTION

One objective of the present invention is to provide a communication system with the train bus architecture to economize the installation of the transmission units and receiving units of the controlled module for saving the manufacturing cost of the communication system when the control unit of the controlled module controls the train bus architecture.

Another objective of the present invention is to provide a communication system with the train bus architecture to increase the efficiency of the data transmission when the train bus architecture rapidly sends the instruction packets and response packets.

The present invention is defined in the appended independent claim 1 to which reference should be made. Advantageous features are set out in the appended dependent claims.

### BRIEF DESCRIPTION OF THE DRAWINGS

FIG. 1 is a schematic block diagram of conventional communication system with a master-slave structure;
FIG. 2 is a schematic block diagram of communication system with a train bus architecture according to one embodiment of the present invention;
FIG. 3 is a schematic block diagram of exchanging and processing the data packets by a controlled module with a control unit according to one embodiment of the present invention; and
FIG. 4 is a schematic view of performing a sorting procedure and a detecting procedure of the controlled modules by using a detecting packet serial according to one embodiment of the present invention.

### DETAILED DESCRIPTION OF THE PREFERRED EMBODIMENTS

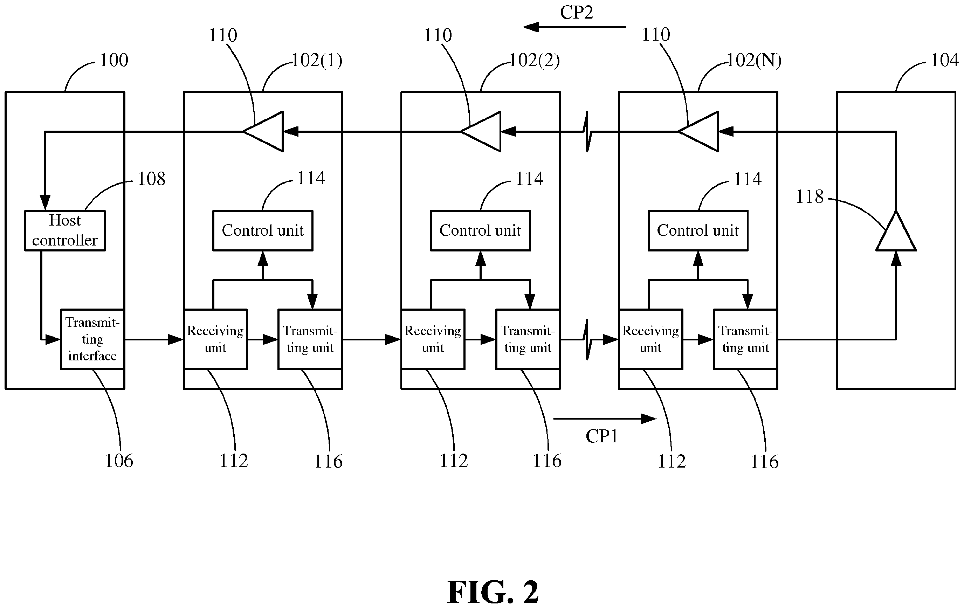

Referring to FIG. 2, which is a schematic block diagram of communication system with a train bus architecture according to one embodiment of the present invention. The communication system comprises a coupling device 100, at least one controlled module 102 and a terminal device 104. The at least one controlled module 102 is connected to the coupling device 100 and the terminal device 104 respectively wherein the at least one controlled module 102 is disposed between the coupling device 100 and the terminal device 104. In FIG. 2, the amount "N" of the controlled modules 102 are serially disposed between the coupling device 100 and the terminal device 104.

The coupling device 100 transmits a first instruction packet string, e.g. a packet serial, via a first path CP1 from the coupling device 100 to the terminal device 104 wherein the first instruction packet string comprises a plurality of instruction packets. In one embodiment, the coupling device 100 comprises a transmitting interface 106 and a host controller 108 connected to the transmitting interface 106. The transmitting interface 106 transmits the first instruction packet string to the at least one controlled module 102 via the first path CP1. The host controller 108 of the coupling device 100 receives the second instruction packet string from the at least one controlled module 102 via the second path CP2 from the terminal device 104 to the coupling device 100. Specifically, the first path CP1 is defined as a data transmission path from the coupling device 100 to the terminal device 104 via the controlled modules 102, and the second path CP2 is defined as a data transmission path from the terminal device 104 to the coupling device 100 via the controlled modules 102.

The at least one controlled module 102 connected to the coupling device 100 receives the first instruction packet string via the first path CP1. The at least one controlled module 102 selects and acquires one instruction packet, which is corresponding to the at least one controlled module 102, from the instruction packets of the first instruction packet string. Afterward, the controlled module 102 replaces the selected instruction packet by a first response packet for forming a second instruction packet string. In one case, the first response packet originally stored in the controlled module 102 is inserted to the first instruction packet string to be combined with the first instruction packet string to form the second instruction packet string. The controlled module 102 processes the selected instruction packet to generate a second response packet. In another case, the first and second response packets are inserted to the first instruction packet string to form the second instruction packet string after the corresponding instruction packet is selected. In other words, the first and second response packets of each controlled module 102 are generated in a current or previous transmission procedure of the train bus architecture. Preferably, the first instruction packet string (an input end of the controlled module 102) is a packet string before inserting the response packet and the second instruction packet string (an output end of the controlled module 102) is a packet string after inserting the response packet in a predetermined controlled module 102.

The terminal device 104 connected to the last controlled module 102, e.g. stage "N", receives the second instruction packet string wherein the second instruction packet string comprises the first response packet, the second response packet and/or the instruction packets which are not corresponding to the at least one controlled module 102 via the first path CP1. The terminal device 104 transmits the second instruction packet string back to the coupling device 100 via the controlled modules 102 along a second path CP2, wherein the first path CP1 is serially connected to the second path CP2 to form the train bus architecture. In one embodiment, the terminal device 104 comprises a second buffer 118 for storing the first response packet, the second response packet and/or the non-corresponding instruction packets of the second instruction packet string from the controlled modules 102. The terminal device 104 receives the first response packets of the controlled modules 102 via the first path CP1 and the coupling device 100 receives the second instruction packet string with the first response packets from each controlled module 102 via the second path CP2.

Specifically, the first controlled module 102(1) in FIG. 2 comprises a receiving unit 112, a control unit 114, a transmitting unit 116 and a first buffer 110. The receiving unit 112 connected to the coupling device 100 receives the first instruction packet string of the coupling device 100 via the first path CP1. The control unit 114 connected to the receiving unit 112 is use to replace the selected instruction packet corresponding to a current controlled module 102(1) by the first response packet so that the selected instruction packet is acquired from the first instruction packet string and the first response packet is inserted to first instruction packet string. The transmitting unit 116 connected to the control unit 114 of the current controlled module 102(1) and the receiving unit 112 of a next controlled module 102(2) respectively transmits the second instruction packet string from the current controlled module 102(1) to the next controlled module 102(2) via the first path CP1. The first buffer 110 connected to the next controlled module 102(1) and the coupling device 100 is capable of storing the second instruction packet string from the terminal device 104 via the second path CP2.

Each of the controlled modules 102(2) through 102(N-1) comprises a receiving unit 112, a control unit 114, a transmitting unit 116 a first buffer 110. The receiving unit 112 connected to a prior controlled module 102 (one of controlled modules 102(1) through 102(N-2) correspondingly) receives the second instruction packet string of the prior controlled module 102 (one of controlled modules 102(1) through 102(N-2) correspondingly) via the first path CP1. The control unit 114 connected to the receiving unit 112 replaces the selected instruction packet corresponding to a current controlled module (one of controlled modules 102(2) through 102(N-1) correspondingly) by the first response packet so that the selected instruction packet is acquired from the first instruction packet string and the first response packet is inserted to first instruction packet string. The transmitting unit 116 connected to the control unit 114 of the current controlled module (one of controlled modules 102(2) through 102(N-1) correspondingly) and the receiving unit 112 of a next controlled modules (one of controlled modules 102(3) through 102(N) correspondingly) respectively transmits the second instruction packet string from the current controlled module (one of controlled modules 102(2) through 102(N-1) to the next controlled module (one of controlled modules 102(3) through 102(N) correspondingly) via the first path CP1. The first buffer 110 connected to the next controlled module (one of controlled modules 102(3) through 102(N) correspondingly) and the prior controlled module (one of controlled modules 102(1) through 102(N-2) correspondingly) stores the second instruction packet string from the terminal device 104 via the second path CP2.

The last controlled module 102(N) in FIG. 2 comprises a receiving unit 112, a control unit 114, a transmitting unit 116 and a first buffer 110. The receiving unit 112 connected to a prior controlled module 102(N-1) receives the second instruction packet string of the prior controlled module 102(N-1) via the first path CP1. The control unit 114 connected to the receiving unit 112 is capable of replacing the selected instruction packet corresponding to a current controlled module 102 (N) by the first response packet so that the selected instruction packet is acquired from the first instruction packet string and the first response packet is inserted to first instruction packet string. The transmitting unit 116 connected to the control unit 114 of the current controlled module 102(N) and the terminal device 104 respectively is used to transmit the second instruction packet string from the current controlled module 102(N) to the terminal device 104. The first buffer 110 connected to the terminal device 104 and the prior controlled module 102(N-1) stores the second instruction packet string from the terminal device 104. In one embodiment, a transmission time of the first instruction packet string from the coupling device 100 to the terminal device 104 via the first path CP1 is greater than a transmission time of the second instruction packet string from the terminal device 104 to the coupling device 100 via the second path CP2. Thus, the communication system with the train bus architecture employs the transmission time difference between the first path CP1 and the second path CP2 to increase the efficiency of the data transmission when the train bus architecture rapidly sends the instruction packets and response packets. Specifically, the time delay between two first buffers 110 of two adjacent controlled module 102 along the second path CP2 are minimized since the receiving unit 112 and the transmitting unit 116 of each first buffer 110 is omitted advantageously so that the data packets are directly inputted to each first buffer 110 and outputted from each first buffer 110. Similarly, the time delay between two control units 114 of two adjacent controlled module 102 along the first path CP1 are decreased since the controlled module 102 rapidly selects and acquires one instruction packet corresponding to the controlled module 102 from the first instruction packet string and a first response packet and/or second response packet is quickly inserted to the second instruction packet string to form the second instruction packet string for transmission.

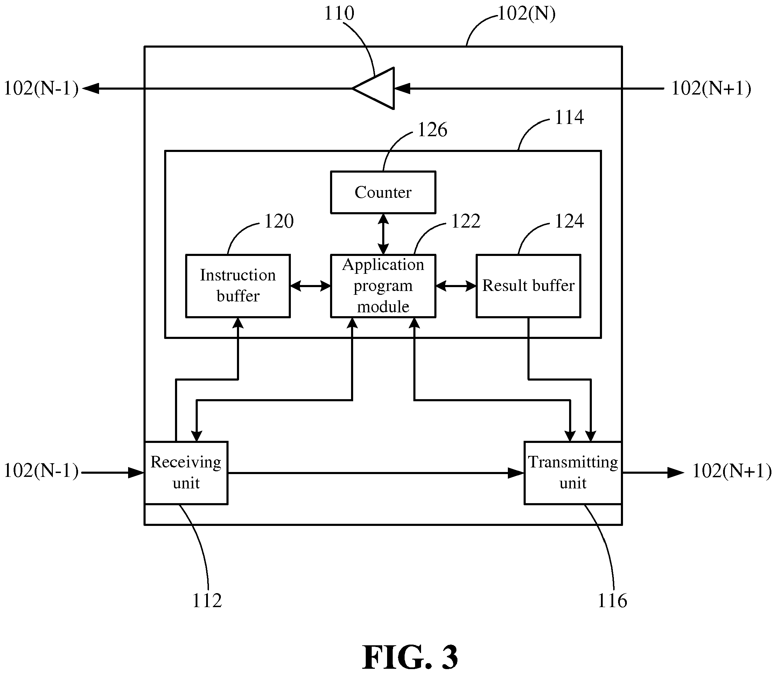

Referring to FIG. 3, which is a schematic block diagram of exchanging and processing the data packets by the controlled module 102 with the control unit 114 according to one embodiment of the present invention. The control unit 114 further comprises an instruction buffer 120, an application program module 122, a result buffer 124 and a counter 126. The instruction buffer 120 connected to the receiving unit 112.

The application program module 122 connected to the instruction buffer 120 and the receiving unit 112 detects the first instruction packet string or the second instruction packet string. When an indication number of the instruction packet in the at least one of both first instruction packet string and the second instruction packet string corresponds to the current controlled module 102, the application program module 122 copies the indicated instruction packet to the instruction buffer 120 and replaces the indicated instruction packets in the first instruction packet string or the second instruction packet string by the first response packet with the same indication number. When the indication number of the instruction packets in the first instruction packet string or the second instruction packet string does not correspond to the current controlled module 102, the application program module 122 transmits the non-corresponding instruction packets forward to the receiving unit 112 of the next controlled module 102.

The result buffer 124 connected to the application program module 122 and the transmitting unit 116, and the application program module 122 acquires and processes the corresponding instruction packets within the instruction buffer 120 in a predetermined duration for forming the first response packets of the current controlled module 102 and for storing the first response packets in the result buffer 124.

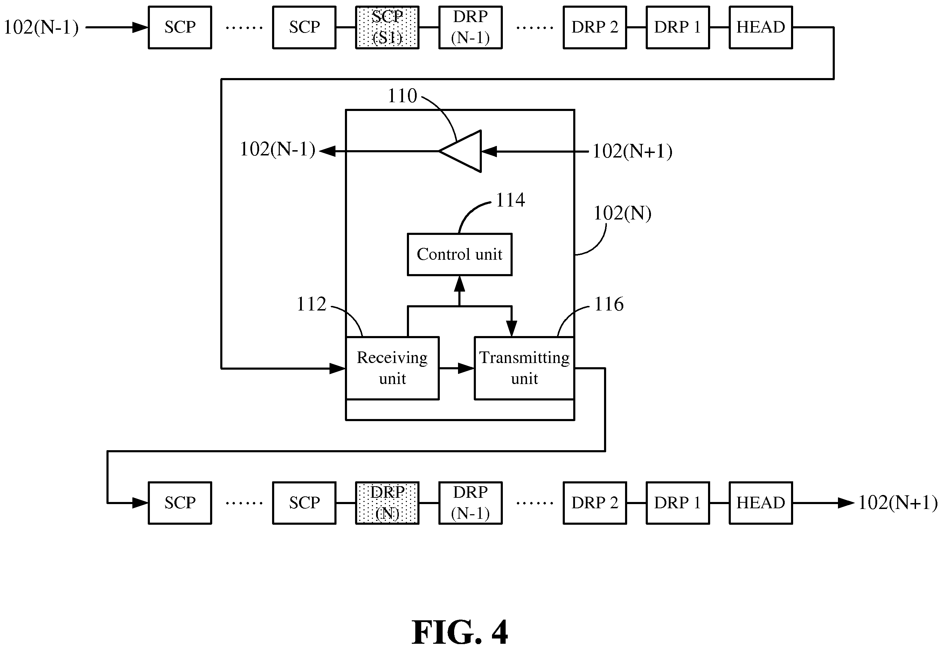

Referring to FIG. 2 through FIG. 4, FIG. 4 is a schematic view of performing a sorting procedure and a detecting procedure of the controlled modules 102 by using a detecting packet serial according to one embodiment of the present invention. The coupling device 100 transmits a first detecting packet serial via the first path CP1 and the first detecting packet serial comprises a head packet (HEAD) followed by a plurality of encoding packets (SCPs). When the controlled module 102, e.g. stage "N" in FIG. 4, receives or identifies the head packet of the first detecting packet serial, the counter 126 of the controlled module 102 counts the encoding packets in the first detecting packet serial until the controlled module 102 figures out the first one S1 of the encoding packets to allow the controlled module 102 to generate a counting number of the first encoding packet wherein the counting number represents a number of the controlled module 102. In one embodiment of FIG. 4, when the controlled module 102 (N) identifies the head packet "HEAD", the counter 126 counts encoding packets SCPs until the controlled module 102 (N) figures out the first SCP S1 to generate the counting number "N", i.e. next one of DRP (N-1). Thus, the counting number "N" represents an identification number of the controlled module 102. The controlled module 102 (N) replaces the first encoding packet S1 by a reporting packet "DRP N" for forming a second detecting packet serial and the second detecting packet serial is then transmitted to the terminal device 104. In FIG. 4, the reporting packets "DRP 1" through "DRP N" are generated by the controlled modules 102 (1) through 102 (N) respectively wherein the reporting packets "DRP 1" through "DRP N" represent the characteristics of the corresponding controlled modules 102 (1) through 102 (N) respectively. The coupling device 100 receives the second detecting packet serial outputted from the terminal device 104 to compute the amount of the at least one controlled module 102 and to identify the characteristics of the corresponding controlled modules 102 (1) through 102 (N). In one embodiment, the amount of the controlled modules 102 is equal to the difference value between the encoding packets SCPs of the first detecting packet serial in the first controlled module 102 (1) and the rest of encoding packets SCPs of the second detecting packet serial outputted from the last controlled module 102 (N).

According to above-mentioned descriptions, the present invention employs a communication system with the train bus architecture to economize the installation of the transmission units of the controlled module for saving the manufacturing cost of the communication system when the control unit of the controlled module controls the train bus architecture. Furthermore, the communication system with the train bus architecture employs the transmission time difference between the first path CP1 and the second path CP2 to increase the efficiency of the data transmission when the train bus architecture rapidly sends the instruction packets and response packets.

## Claims

1. A communication system with a train bus architecture, wherein the communication system comprises a coupling device (100) configured to transmit a first instruction packet string via a first path (CP1) wherein the first instruction packet string comprises a plurality of instruction packets, the communication system further comprises:
at least one controlled module (102) connected to the coupling device (100) and configured to receive the first instruction packet string via the first path (CP1), wherein the at least one controlled module (102) is adapted to select one instruction packet corresponding to the at least one controlled module (102) from the instruction packets of the first instruction packet string, is adapted to replace the selected instruction packet by a first response packet in the at least one controlled module (102) for forming a second instruction packet string, and is adapted to process the selected instruction packet to generate a second response packet; and
a terminal device (104) connected to the at least one controlled module (102) and configured to receive the second instruction packet string comprising the first response packet, the second response packet, and/or the instruction packets which does not correspond to the at least one controlled module (102) via the first path (CP1) from the coupling device (100) to the terminal device (104), and the terminal device (104) being configured to transmit the second instruction packet string back to the coupling device (100) via the at least one controlled module (102) along a second path (CP2) from the terminal device (104) to the coupling device (100), wherein the first path (CP1) is connected to the second path (CP2) to form the train bus architecture.

2. The communication system with the train bus architecture of claim 1, **characterized in that** the coupling device (100) comprises:
a transmitting interface (106) configured to transmit the first instruction packet string to the at least one controlled module (102) via the first path (CP1); and
a host controller (108) connected to the transmitting interface (106) and configured to receive the second instruction packet string from the at least one controlled module (102) via the second path (CP2).

3. The communication system with the train bus architecture of claim 1, **characterized in that** the at least one controlled module (102) is composed of one controlled module (102) and the controlled module (102) comprises:
a receiving unit (112) connected to the coupling device (100) and configured to receive the first instruction packet string of the coupling device (100) via the first path (CP1);
a control unit (114) connected to the receiving unit (112) and configured to replace the selected instruction packet corresponding to the controlled module (102) by the first response packet;
a transmitting unit (116) connected to the control unit (114) of the controlled module (102) and the receiving unit (112) of a next controlled module (102) respectively and the transmitting unit (116) being configured to transmit the second instruction packet string from the controlled module (102) to the next controlled module (102) via the first path (CP1); and
a first buffer (110) connected to the next controlled module (102) and the coupling device (100) and configured to store the second instruction packet string from the terminal device (104) via the second path (CP2).

4. The communication system with the train bus architecture of claim 1, **characterized in that** the at least one controlled module (102) is composed of a plurality of controlled modules (102) and each controlled module (102) comprises:
a receiving unit (112) connected to a prior controlled module (102) and configured to receive the second instruction packet string of the prior controlled module (102) via the first path (CP1);
a control unit (114) connected to the receiving unit (112) and configured to replace the selected instruction packet corresponding to a current controlled module (102) by the first response packet;
a transmitting unit (116) connected to the control unit (114) of the current controlled module (102) and the receiving unit (112) of a next controlled module (102) respectively and the transmitting unit (116) being configured to transmit the second instruction packet string from the current controlled module (102) to the next controlled module (102) via the first path (CP1); and
a first buffer (110) connected to the next controlled module (102) and the prior controlled module (102) and configured to store the second instruction packet string from the terminal device (104) via the second path (CP2).

5. The communication system with the train bus architecture of claim 4, **characterized in that** the terminal device (104) is adapted to receive each first response packet of each controlled module (102) via the first path (CP1) and the coupling device (100) is adapted to receive the second instruction packet string with the first response packets of each controlled module (102) from the terminal device (104) via the second path (CP2).

6. The communication system with the train bus architecture of claim 4, **characterized in that** the control unit (114) further comprises:
an instruction buffer (120) connected to the receiving unit (112) in the current controlled module (102); and
an application program module (122) connected to the instruction buffer (120) and the receiving unit (112) and configured to detect the first instruction packet string or the second instruction packet string, wherein when an indication number of the instruction packet in the first instruction packet string or the second instruction packet string corresponds to the current controlled module (102), the application program module (122) is adapted to copy the indicated instruction packet to the instruction buffer (120) and to replace the indicated instruction packets in the first instruction packet string or the second instruction packet string by the first response packet with the indication number.

7. The communication system with the train bus architecture of claim 6, **characterized in that** when the indication number of the instruction packet in the first instruction packet string or the second instruction packet string does not correspond to the current controlled module (102), the application program module (122) is adapted to transmit the non-corresponding instruction packets forward to the receiving unit (112) of the next controlled module (102).

8. The communication system with the train bus architecture of claim 6, **characterized in that** the control unit (114) further comprises a result buffer (124) connected to the application program module (122) and the transmitting unit (116) in the current controlled module (102), and the application program module (122) is adapted to acquire and process the corresponding instruction packets within the instruction buffer (120) in a predetermined duration for forming the first response packet of the current controlled module (102) and for storing the first response packets in the result buffer (124).

9. The communication system with the train bus architecture of claim 1, **characterized in that** the at least one controlled module (102) is composed of one controlled module (102) and the controlled module (102) comprises:
a receiving unit (112) connected to a prior controlled module (102) and configured to receive the second instruction packet string of the prior controlled module (102) via the first path (CP1);
a control unit (114) connected to the receiving unit (112) and configured to replace the selected instruction packet corresponding to the controlled module (102) by the first response packet;
a transmitting unit (116) connected to the control unit (114) of the current controlled module (102) and the terminal device (104) respectively and configured to transmit the second instruction packet string from the controlled module (102) to the terminal device (104) via the first path (CP1); and
a first buffer (110) connected to the terminal device (104) and the prior controlled module (102) and configured to store the second instruction packet string from the terminal device (104) via the second path (CP2).

10. The communication system with the train bus architecture of claim 1, **characterized in that** the terminal device (104) comprises a second buffer configured to store the first response packets of the second instruction packet string from the at least one controlled module (102).

11. The communication system with the train bus architecture of claim 1, **characterized in that** the coupling device (100) is adapted to transmit a first detecting packet serial via the first path (CP1) and the first detecting packet serial comprises a head packet followed by a plurality of encoding packets (SCP).

12. The communication system with the train bus architecture of claim 11, **characterized in that** when the controlled module (102) is adapted to identify the head packet of the first detecting packet serial, a counter (126) of the controlled module (102) is adapted to count the packets in the first detecting packet serial until the controlled module (102) is adapted to figure out a position of the first encoding packet (SCP S1) to allow the controlled module (102) to generate a counting number of the first encoding packet (SCP) and the counting number is adapted to represent a number of the controlled module (102).

13. The communication system with the train bus architecture of claim 12, **characterized in that** the at least one controlled module (102) is adapted to replace the first encoding packet (SCP S1) by a reporting packet (DRP) for forming a second detecting packet serial and the second detecting packet serial to be transmitted to the terminal device (104).

14. The communication system with the train bus architecture of claim 13, **characterized in that** the coupling device (100) is adapted to receive the second detecting packet serial from the terminal device (104) to compute an amount of the at least one controlled module (102) and to identify a characteristic of the controlled module (102) based on the reporting packet (DRP).

15. The communication system with the train bus architecture of claim 1, **characterized in that** a transmission time of the first instruction packet string from the coupling device (100) to the terminal device (104) via the first path (CP1) is greater than a transmission time of the second instruction packet string from the terminal device (104) to the coupling device (100) via the second path (CP2).

## Patentansprüche

1. Ein Kommunikationssystem mit einer Zugbusarchitektur, wobei das Kommunikationssystem eine Kopplungsvorrichtung (100) beinhaltet, die konfiguriert ist, um eine erste Anweisungspaketfolge über einen ersten Pfad (CP1) zu übertragen, wobei die erste Anweisungspaketfolge eine Vielzahl von Anweisungspaketen beinhaltet, wobei das Kommunikationssystem ferner Folgendes beinhaltet:
mindestens ein gesteuertes Modul (102), das mit der Kopplungsvorrichtung (100) verbunden ist und konfiguriert ist, um die erste Anweisungspaketfolge über den ersten Pfad (CP1) zu empfangen, wobei das mindestens eine gesteuerte Modul (102) angepasst ist, um aus den Anweisungspaketen der ersten Anweisungspaketfolge ein Anweisungspaket auszuwählen, das dem mindestens einen gesteuerten Modul (102) entspricht, angepasst ist, um das ausgewählte Anweisungspaket durch ein erstes Antwortpaket in dem mindestens einen gesteuerten Modul (102) zu ersetzen, um eine zweite Anweisungspaketfolge zu bilden, und angepasst ist, um das ausgewählte Anweisungspaket zu verarbeiten, um ein zweites Antwortpaket zu erzeugen; und
eine Endgerätvorrichtung (104), die mit dem mindestens einen gesteuerten Modul (102) verbunden ist und konfiguriert ist, um die zweite Anweisungspaketfolge, die das erste Antwortpaket, das zweite Antwortpaket und/oder die Anweisungspakete, die nicht dem mindestens einen gesteuerten Modul (102) entsprechen, beinhaltet, über den ersten Pfad (CP1) von der Kopplungsvorrichtung (100) zu der Endgerätvorrichtung (104) zu empfangen, und wobei die Endgerätvorrichtung (104) konfiguriert ist, um die zweite Anweisungspaketfolge über das mindestens eine gesteuerte Modul (102) entlang einem zweiten Pfad (CP2) von der Endgerätvorrichtung (104) zu der Kopplungsvorrichtung (100) zurück an die Kopplungsvorrichtung (100) zu übertragen, wobei der erste Pfad (CP1) mit dem zweiten Pfad (CP2) verbunden ist, um die Zugbusarchitektur zu bilden.

2. Kommunikationssystem mit der Zugbusarchitektur gemäß Anspruch 1, **dadurch gekennzeichnet, dass** die Kopplungsvorrichtung (100) Folgendes beinhaltet:
eine Übertragungsschnittstelle (106), die konfiguriert ist, um die erste Anweisungspaketfolge an das mindestens eine gesteuerte Modul (102) über den ersten Pfad (CP1) zu übertragen; und
einen Host-Controller (108), der mit der Übertragungsschnittstelle (106) verbunden ist und konfiguriert ist, um die zweite Anweisungspaketfolge von dem mindestens einen gesteuerten Modul (102) über den zweiten Pfad (CP2) zu empfangen.

3. Kommunikationssystem mit der Zugbusarchitektur gemäß Anspruch 1, **dadurch gekennzeichnet, dass** das mindestens eine gesteuerte Modul (102) aus einem gesteuerten Modul (102) besteht und das gesteuerte Modul (102) Folgendes beinhaltet:
eine Empfangseinheit (112), die mit der Kopplungsvorrichtung (100) verbunden ist und konfiguriert ist, um die erste Anweisungspaketfolge der Kopplungsvorrichtung (100) über den ersten Pfad (CP1) zu empfangen;
eine Steuereinheit (114), die mit der Empfangseinheit (112) verbunden ist und konfiguriert ist, um das ausgewählte Anweisungspaket, das dem gesteuerten Modul (102) entspricht, durch das erste Antwortpaket zu ersetzen;
eine Übertragungseinheit (116), die jeweils mit der Steuereinheit (114) des gesteuerten Moduls (102) und der Empfangseinheit (112) eines nächsten gesteuerten Moduls (102) verbunden ist und wobei die Übertragungseinheit (116) konfiguriert ist, um die zweite Anweisungspaketfolge von dem gesteuerten Modul (102) an das nächste gesteuerte Modul (102) über den ersten Pfad (CP1) zu übertragen; und
einen ersten Zwischenspeicher (110), der mit dem nächsten gesteuerten Modul (102) und der Kopplungsvorrichtung (100) verbunden ist und konfiguriert ist, um die zweite Anweisungspaketfolge von der Endgerätvorrichtung (104) über den zweiten Pfad (CP2) zu speichern.

4. Kommunikationssystem mit der Zugbusarchitektur gemäß Anspruch 1, **dadurch gekennzeichnet, dass** das mindestens eine gesteuerte Modul (102) aus einer Vielzahl von gesteuerten Modulen (102) besteht und jedes gesteuerte Modul (102) Folgendes beinhaltet:
eine Empfangseinheit (112), die mit einem vorhergehenden gesteuerten Modul (102) verbunden ist und konfiguriert ist, um die zweite Anweisungspaketfolge des vorhergehenden gesteuerten Moduls (102) über den ersten Pfad (CP1) zu empfangen;
eine Steuereinheit (114), die mit der Empfangseinheit (112) verbunden ist und konfiguriert ist, um das ausgewählte Anweisungspaket, das einem aktuellen gesteuerten Modul (102) entspricht, durch das erste Antwortpaket zu ersetzen;
eine Übertragungseinheit (116), die jeweils mit der Steuereinheit (114) des aktuellen gesteuerten Moduls (102) und der Empfangseinheit (112) eines nächsten gesteuerten Moduls (102) verbunden ist und wobei die Übertragungseinheit (116) konfiguriert ist, um die zweite Anweisungspaketfolge von dem aktuellen gesteuerten Modul (102) an das nächste gesteuerte Modul (102) über den ersten Pfad (CP1) zu übertragen; und
einen ersten Zwischenspeicher (110), der mit dem nächsten gesteuerten Modul (102) und dem vorhergehenden gesteuerten Modul (102) verbunden ist und konfiguriert ist, um die zweite Anweisungspaketfolge von der Endgerätvorrichtung (104) über den zweiten Pfad (CP2) zu speichern.

5. Kommunikationssystem mit der Zugbusarchitektur gemäß Anspruch 4, **dadurch gekennzeichnet, dass** die Endgerätvorrichtung (104) angepasst ist, um jedes erste Antwortpaket jedes gesteuerten Moduls (102) über den ersten Pfad (CP1) zu empfangen und die Kopplungsvorrichtung (100) angepasst ist, um die zweite Anweisungspaketfolge mit den ersten Antwortpaketen jedes gesteuerten Moduls (102) von der Endgerätvorrichtung (104) über den zweiten Pfad (CP2) zu empfangen.

6. Kommunikationssystem mit der Zugbusarchitektur gemäß Anspruch 4, **dadurch gekennzeichnet, dass** die Steuereinheit (114) ferner Folgendes beinhaltet:
einen Anweisungszwischenspeicher (120), der mit der Empfangseinheit (112) in dem aktuellen gesteuerten Modul (102) verbunden ist; und
ein Anwendungsprogrammmodul (122), das mit dem Anweisungszwischenspeicher (120) und der Empfangseinheit (112) verbunden ist und konfiguriert ist, um die erste Anweisungspaketfolge oder die zweite Anweisungspaketfolge zu erkennen, wobei, wenn eine Anzeigenummer des Anweisungspakets in der ersten Anweisungspaketfolge oder der zweiten Anweisungspaketfolge dem aktuellen gesteuerten Modul (102) entspricht, das Anwendungsprogrammmodul (122) angepasst ist, um das angezeigte Anweisungspaket in den Anweisungszwischenspeicher (120) zu kopieren und die angezeigten Anweisungspakete in der ersten Anweisungspaketfolge oder der zweiten Anweisungspaketfolge durch das erste Antwortpaket mit der Anzeigenummer zu ersetzen.

7. Kommunikationssystem mit der Zugbusarchitektur gemäß Anspruch 6, **dadurch gekennzeichnet, dass**, wenn die Anzeigenummer des Anweisungspakets in der ersten Anweisungspaketfolge oder der zweiten Anweisungspaketfolge nicht dem aktuellen gesteuerten Modul (102) entspricht, das Anwendungsprogrammmodul (122) angepasst ist, um die nicht entsprechenden Anweisungspakete weiter an die Empfangseinheit (112) des nächsten gesteuerten Moduls (102) zu übertragen.

8. Kommunikationssystem mit der Zugbusarchitektur gemäß Anspruch 6, **dadurch gekennzeichnet, dass** die Steuereinheit (114) ferner einen Ergebniszwischenspeicher (124) beinhaltet, der mit dem Anwendungsprogrammmodul (122) und der Übertragungseinheit (116) in dem aktuellen gesteuerten Modul (102) verbunden ist, und das Anwendungsprogrammmodul (122) angepasst ist, um die entsprechenden Anweisungspakete innerhalb des Anweisungszwischenspeichers (120) in einer vorbestimmten Dauer aufzunehmen und zu verarbeiten, um das erste Antwortpaket des aktuellen gesteuerten Moduls (102) zu bilden und um die ersten Antwortpakete in dem Ergebniszwischenspeicher (124) zu speichern.

9. Kommunikationssystem mit der Zugbusarchitektur gemäß Anspruch 1, **dadurch gekennzeichnet, dass** das mindestens eine gesteuerte Modul (102) aus einem gesteuerten Modul (102) besteht und das gesteuerte Modul (102) Folgendes beinhaltet:
eine Empfangseinheit (112), die mit einem vorhergehenden gesteuerten Modul (102) verbunden ist und konfiguriert ist, um die zweite Anweisungspaketfolge des vorhergehenden gesteuerten Moduls (102) über den ersten Pfad (CP1) zu empfangen;
eine Steuereinheit (114), die mit der Empfangseinheit (112) verbunden ist und konfiguriert ist, um das ausgewählte Anweisungspaket, das dem gesteuerten Modul (102) entspricht, durch das erste Antwortpaket zu ersetzen;
eine Übertragungseinheit (116), die jeweils mit der Steuereinheit (114) des aktuellen gesteuerten Moduls (102) und der Endgerätvorrichtung (104) verbunden ist und konfiguriert ist, um die zweite Anweisungspaketfolge von dem gesteuerten Modul (102) an die Endgerätvorrichtung (104) über den ersten Pfad (CP1) zu übertragen; und
einen ersten Zwischenspeicher (110), der mit der Endgerätvorrichtung (104) und dem vorhergehenden gesteuerten Modul (102) verbunden ist und konfiguriert ist, um die zweite Anweisungspaketfolge von der Endgerätvorrichtung (104) über den zweiten Pfad (CP2) zu speichern.

10. Kommunikationssystem mit der Zugbusarchitektur gemäß Anspruch 1, **dadurch gekennzeichnet, dass** die Endgerätvorrichtung (104) einen zweiten Zwischenspeicher beinhaltet, der konfiguriert ist, um die ersten Antwortpakete der zweiten Anweisungspaketfolge von dem mindestens einen gesteuerten Modul (102) zu speichern.

11. Kommunikationssystem mit der Zugbusarchitektur gemäß Anspruch 1, **dadurch gekennzeichnet, dass** die Kopplungsvorrichtung (100) angepasst ist, um eine erste Erkennungspaketserie über den ersten Pfad (CP1) zu übertragen, und die erste Erkennungspaketserie ein Kopfpaket beinhaltet, dem eine Vielzahl von Codierpaketen (SCP) folgen.

12. Kommunikationssystem mit der Zugbusarchitektur gemäß Anspruch 11, **dadurch gekennzeichnet, dass**, wenn das gesteuerte Modul (102) angepasst ist, um das Kopfpaket der ersten Erkennungspaketserie zu identifizieren, ein Zähler (126) des gesteuerten Moduls (102) angepasst ist, um die Pakete in der ersten Erkennungspaketserie zu zählen, bis das gesteuerte Modul (102) angepasst ist, um eine Position des ersten Codierpakets (SCP S1) zu ermitteln, um es dem gesteuerten Modul (102) zu ermöglichen, eine Zählnummer des ersten Codierpakets (SCP) zu erzeugen, und die Zählnummer angepasst ist, um eine Nummer des gesteuerten Moduls (102) darzustellen.

13. Kommunikationssystem mit der Zugbusarchitektur gemäß Anspruch 12, **dadurch gekennzeichnet, dass** das mindestens eine gesteuerte Modul (102) angepasst ist, um das erste Codierpaket (SCP S1) durch ein Berichtpaket (DRP) zu ersetzen, um eine zweite Erkennungspaketserie zu bilden und damit die zweite Erkennungspaketserie an die Endgerätvorrichtung (104) übertragen wird.

14. Kommunikationssystem mit der Zugbusarchitektur gemäß Anspruch 13, **dadurch gekennzeichnet, dass** die Kopplungsvorrichtung (100) angepasst ist, um die zweite Erkennungspaketserie von der Endgerätvorrichtung (104) zu empfangen, um eine Menge des mindestens einen gesteuerten Moduls (102) zu errechnen und eine Eigenschaft des gesteuerten Moduls (102) basierend auf dem Berichtpaket (DRP) zu identifizieren.

15. Kommunikationssystem mit der Zugbusarchitektur gemäß Anspruch 1, **dadurch gekennzeichnet, dass** eine Übertragungszeit der ersten Anweisungspaketfolge von der Kopplungsvorrichtung (100) an die Endgerätvorrichtung (104) über den ersten Pfad (CP1) größer als eine Übertragungszeit der zweiten Anweisungspaketfolge von der Endgerätvorrichtung (104) an die Kopplungsvorrichtung (100) über den zweiten Pfad (CP2) ist.

## Revendications

1. Un système de communication à architecture de bus de train, le système de communication comprenant un dispositif de couplage (100) configuré pour transmettre une première chaîne de paquets d'instruction par l'intermédiaire d'un premier chemin (CP1), la première chaîne de paquets d'instruction comprenant une pluralité de paquets d'instruction, le système de communication comprenant en outre :
au moins un module commandé (102) connecté au dispositif de couplage (100) et configuré pour recevoir la première chaîne de paquets d'instruction par l'intermédiaire du premier chemin (CP1), l'au moins un module commandé (102) étant conçu pour sélectionner un paquet d'instruction correspondant à l'au moins un module commandé (102) parmi les paquets d'instruction de la première chaîne de paquets d'instruction, étant conçu pour remplacer le paquet d'instruction sélectionné par un premier paquet de réponse dans l'au moins un module commandé (102) pour former une deuxième chaîne de paquets d'instruction, et étant conçu pour traiter le paquet d'instruction sélectionné afin de générer un deuxième paquet de réponse ; et
un dispositif terminal (104) connecté à l'au moins un module commandé (102) et configuré pour recevoir la deuxième chaîne de paquets d'instruction comprenant le premier paquet de réponse, le deuxième paquet de réponse, et/ou les paquets d'instruction qui ne correspondent pas à l'au moins un module commandé (102) par l'intermédiaire du premier chemin (CP1) allant du dispositif de couplage (100) au dispositif terminal (104), et le dispositif terminal (104) étant configuré pour transmettre la deuxième chaîne de paquets d'instruction en retour au dispositif de couplage (100) par l'intermédiaire de l'au moins un module commandé (102) le long d'un deuxième chemin (CP2) allant du dispositif terminal (104) au dispositif de couplage (100), le premier chemin (CP1) étant connecté au deuxième chemin (CP2) pour former l'architecture de bus de train.

2. Le système de communication à architecture de bus de train de la revendication 1, **caractérisé en ce que** le dispositif de couplage (100) comprend :
une interface de transmission (106) configurée pour transmettre la première chaîne de paquets d'instruction à l'au moins un module commandé (102) par l'intermédiaire du premier chemin (CP1) ; et
un contrôleur hôte (108) connecté à l'interface de transmission (106) et configuré pour recevoir la deuxième chaîne de paquets d'instruction en provenance de l'au moins un module commandé (102) par l'intermédiaire du deuxième chemin (CP2).

3. Le système de communication à architecture de bus de train de la revendication 1, **caractérisé en ce que** l'au moins un module commandé (102) est composé d'un module commandé (102) et le module commandé (102) comprend :
une unité de réception (112) connectée au dispositif de couplage (100) et configurée pour recevoir la première chaîne de paquets d'instruction du dispositif de couplage (100) par l'intermédiaire du premier chemin (CP1) ;
une unité de commande (114) connectée à l'unité de réception (112) et configurée pour remplacer le paquet d'instruction sélectionné correspondant au module commandé (102) par le premier paquet de réponse ;
une unité de transmission (116) connectée à l'unité de commande (114) du module commandé (102) et à l'unité de réception (112) d'un module commandé suivant (102) respectivement et l'unité de transmission (116) étant configurée pour transmettre la deuxième chaîne de paquets d'instruction du module commandé (102) au module commandé suivant (102) par l'intermédiaire du premier chemin (CP1) ; et
un premier tampon (110) connecté au module commandé suivant (102) et au dispositif de couplage (100) et configuré pour stocker la deuxième chaîne de paquets d'instruction en provenance du dispositif terminal (104) par l'intermédiaire du deuxième chemin (CP2).

4. Le système de communication à architecture de bus de train de la revendication 1, **caractérisé en ce que** l'au moins un module commandé (102) est composé d'une pluralité de modules commandés (102) et chaque module commandé (102) comprend :
une unité de réception (112) connectée à un module commandé précédent (102) et configurée pour recevoir la deuxième chaîne de paquets d'instruction du module commandé précédent (102) par l'intermédiaire du premier chemin (CP1) ;
une unité de commande (114) connectée à l'unité de réception (112) et configurée pour remplacer le paquet d'instruction sélectionné correspondant à un module commandé courant (102) par le premier paquet de réponse ;
une unité de transmission (116) connectée à l'unité de commande (114) du module commandé courant (102) et à l'unité de réception (112) d'un module commandé suivant (102) respectivement et l'unité de transmission (116) étant configurée pour transmettre la deuxième chaîne de paquets d'instruction du module commandé courant (102) au module commandé suivant (102) par l'intermédiaire du premier chemin (CP1) ; et
un premier tampon (110) connecté au module commandé suivant (102) et au module commandé précédent (102) et configuré pour stocker la deuxième chaîne de paquets d'instruction en provenance du dispositif terminal (104) par l'intermédiaire du deuxième chemin (CP2).

5. Le système de communication à architecture de bus de train de la revendication 4, **caractérisé en ce que** le dispositif terminal (104) est conçu pour recevoir chaque premier paquet de réponse de chaque module commandé (102) par l'intermédiaire du premier chemin (CP1) et le dispositif de couplage (100) est conçu pour recevoir la deuxième chaîne de paquets d'instruction ayant les premiers paquets de réponse de chaque module commandé (102) en provenance du dispositif terminal (104) par l'intermédiaire du deuxième chemin (CP2).

6. Le système de communication à architecture de bus de train de la revendication 4, **caractérisé en ce que** l'unité de commande (114) comprend en outre :
un tampon d'instruction (120) connecté à l'unité de réception (112) dans le module commandé courant (102) ; et
un module de programme d'application (122) connecté au tampon d'instruction (120) et à l'unité de réception (112) et configuré pour détecter la première chaîne de paquets d'instruction ou la deuxième chaîne de paquets d'instruction, dans lequel lorsqu'un numéro indicateur du paquet d'instruction dans la première chaîne de paquets d'instruction ou la deuxième chaîne de paquets d'instruction correspond au module commandé courant (102), le module de programme d'application (122) est conçu pour copier le paquet d'instruction indiqué dans le tampon d'instruction (120) et pour remplacer les paquets d'instruction indiqués dans la première chaîne de paquets d'instruction ou la deuxième chaîne de paquets d'instruction par le premier paquet de réponse ayant le numéro indicateur.

7. Le système de communication à architecture de bus de train de la revendication 6, **caractérisé en ce que** lorsque le numéro indicateur du paquet d'instruction dans la première chaîne de paquets d'instruction ou la deuxième chaîne de paquets d'instruction ne correspond pas au module commandé courant (102), le module de programme d'application (122) est conçu pour transmettre les paquets d'instruction non correspondants vers l'avant à l'unité de réception (112) du module commandé suivant (102).

8. Le système de communication à architecture de bus de train de la revendication 6, **caractérisé en ce que** l'unité de commande (114) comprend en outre un tampon de résultat (124) connecté au module de programme d'application (122) et à l'unité de transmission (116) dans le module commandé courant (102), et le module de programme d'application (122) est conçu pour acquérir et traiter les paquets d'instruction correspondants à l'intérieur du tampon d'instruction (120) dans une durée prédéterminée pour former le premier paquet de réponse du module commandé courant (102) et pour stocker les premiers paquets de réponse dans le tampon de résultat (124).

9. Le système de communication à architecture de bus de train de la revendication 1, **caractérisé en ce que** l'au moins un module commandé (102) est composé d'un module commandé (102) et le module commandé (102) comprend :
une unité de réception (112) connectée à un module commandé précédent (102) et configurée pour recevoir la deuxième chaîne de paquets d'instruction du module commandé précédent (102) par l'intermédiaire du premier chemin (CP1) ;
une unité de commande (114) connectée à l'unité de réception (112) et configurée pour remplacer le paquet d'instruction sélectionné correspondant au module commandé (102) par le premier paquet de réponse ;
une unité de transmission (116) connectée à l'unité de commande (114) du module commandé courant (102) et au dispositif terminal (104) respectivement et configurée pour transmettre la deuxième chaîne de paquets d'instruction du module commandé (102) au dispositif terminal (104) par l'intermédiaire du premier chemin (CP1) ; et un premier tampon (110) connecté au dispositif terminal (104) et au module commandé précédent (102) et configuré pour stocker la deuxième chaîne de paquets d'instruction en provenance du dispositif terminal (104) par l'intermédiaire du deuxième chemin (CP2).

10. Le système de communication à architecture de bus de train de la revendication 1, **caractérisé en ce que** le dispositif terminal (104) comprend un deuxième tampon configuré pour stocker les premiers paquets de réponse de la deuxième chaîne de paquets d'instruction en provenance de l'au moins un module commandé (102).

11. Le système de communication à architecture de bus de train de la revendication 1, **caractérisé en ce que** le dispositif de couplage (100) est conçu pour transmettre une première série de paquets de détection par l'intermédiaire du premier chemin (CP1) et la première série de paquets de détection comprend un paquet de tête suivi par une pluralité de paquets de codage (SCP).

12. Le système de communication à architecture de bus de train de la revendication 11, **caractérisé en ce que** lorsque le module commandé (102) est conçu pour identifier le paquet de tête de la première série de paquets de détection, un compteur (126) du module commandé (102) est conçu pour compter les paquets dans la première série de paquets de détection jusqu'à ce que le module commandé (102) soit conçu pour établir une position du premier paquet de codage (SCP S1) afin de permettre au module commandé (102) de générer un numéro de comptage du premier paquet de codage (SCP) et le numéro de comptage est conçu pour représenter un numéro du module commandé (102).

13. Le système de communication à architecture de bus de train de la revendication 12, **caractérisé en ce que** l'au moins un module commandé (102) est conçu pour remplacer le premier paquet de codage (SCP S1) par un paquet de rapport (DRP) pour former une deuxième série de paquets de détection et la deuxième série de paquets de détection est destinée à être transmise au dispositif terminal (104).

14. Le système de communication à architecture de bus de train de la revendication 13, **caractérisé en ce que** le dispositif de couplage (100) est conçu pour recevoir la deuxième série de paquets de détection en provenance du dispositif terminal (104) afin de calculer une quantité de l'au moins un module commandé (102) et d'identifier une caractéristique du module commandé (102) sur la base du paquet de rapport (DRP).

15. Le système de communication à architecture de bus de train de la revendication 1, **caractérisé en ce qu'**un temps de transmission de la première chaîne de paquets d'instruction du dispositif de couplage (100) au dispositif terminal (104) par l'intermédiaire du premier chemin (CP1) est supérieur à un temps de transmission de la deuxième chaîne de paquets d'instruction du dispositif terminal (104) au dispositif de couplage (100) par l'intermédiaire du deuxième chemin (CP2).
